# EUROPEAN PATENT APPLICATION

(11) **EP 3 409 407 A1**
(43) Date of publication of application: **05.12.2018**
(21) Application number: 18161772.1
(22) Date of filing: 14.03.2018
(51) Int. Cl.: B23K 9/09, B23K 9/10, B23K 9/173, B23K 9/18

(54) **WELDING SYSTEMS AND METHOD OF CONTROLLING THE SKICK-OUT DISTANCE OF AN ELECTRODE DURING A WELDING OPERATION, WITH ADAPTIVE CONTROL OF AN AC WELDING WAVEFORM**

(30) Priority: 15.03.2017 US 201715459613
(71) Applicant: Lincoln Global, Inc., Santa Fe Springs, CA 90670 (US)
(72) Inventor: Peters, Steven R., Huntsburg, OH Ohio 44046 (US)
(74) Representative: Grosse Schumacher Knauer von Hirschhausen

(57) **Abstract**

Embodiments of welding systems (100) and of a welding method are disclosed. A welding system (100) includes a waveform generator (107) to generate a welding waveform with an adjustable DC offset and duty cycle. A sensor (139) of the welding system (100) senses a welding parameter at a welding electrode during a welding operation. A controller (110) of the welding system (100) is coupled to the sensor (139) and the waveform generator (107) and compares the welding parameter to a pre-defined parameter. The controller (110) adjusts at least one of the DC offset and the duty cycle of the welding waveform in response to comparing the welding parameter to the pre-defined parameter to control a stick-out distance of the electrode.

## Description

### FIELD OF THE INVENTION

The invention is related to a welding system according to claims 1 and 4 and to a method of controlling a stick-out distance of an electrode during a welding operation according to claim 10. Embodiments of the present invention relate to systems and methods related to welding, and more specifically to welding systems and methods providing control of arc length and electrode stick-out distance for welding operations that use AC welding waveforms.

### TECHNICAL BACKGROUND

Some conventional arc welding wire fed processes control two of the three major variables which include voltage, current, and electrode feed rate (wire feed speed). The other variable is used for adaptive changes in the welding system. For example, a constant voltage (CV) gas metal arc welding (GMAW) system may set wire feed speed and voltage, and let current adapt for changes in electrode stick-out distance. A constant voltage (CV) submerged-arc welding (SAW) system regulates wire feed speed and voltage (to provide a constant deposition rate) and lets current adapt. A constant current (CC) submerged-arc welding (SAW) system regulates current and voltage and lets wire feed speed adapt. Users would like to preset current, voltage, and wire feed speed but still have something else that can be adapted to compensate for changes in electrode stick-out distance.

### DESCRIPTION

In order to improve welding a system according to claim 1 and 4 is described and a method of controlling a stick-out distance of an electrode during a welding operation according to claim 10. Preferred embodiments are subject of the subclaims. Embodiments of the present invention include systems and methods related to welding, including welding systems and methods providing control of an arc length and a stick-out distance of an electrode while holding a wire feed speed of the electrode and a pre-defined voltage and current of a welding waveform substantially constant. In some embodiments, the pre-defined voltage of the welding waveform is a RMS voltage and the pre-defined current of the welding waveform is a RMS current.

One embodiment includes a welding system having a waveform generator, a sensor, and a controller. The waveform generator is configured to generate a welding waveform with an adjustable DC offset and an adjustable duty cycle. In one embodiment, the welding waveform is a submerged-arc welding (SAW) waveform. The welding waveform has a pre-defined voltage and a pre-defined current. The pre-defined voltage may be a root-mean-square (RMS) voltage and the pre-defined current may be a RMS current, in accordance with one embodiment. The sensor is configured to sense a welding parameter at a welding electrode during a welding operation. The controller is communicatively coupled to the sensor and the waveform generator and is configured to compare the welding parameter to a pre-defined parameter. The controller is also configured to adjust at least one of the DC offset and the duty cycle of the welding waveform in response to comparing the welding parameter to the pre-defined parameter to control a stick-out distance of the electrode. A wire feed speed of the electrode may be held substantially constant. The welding parameter may correspond to an arc length between the electrode and a workpiece or a voltage between the electrode and the workpiece, for example. In one embodiment, the controller is configured to adjust at least one of the DC offset and the duty cycle of the welding waveform in response to comparing the welding parameter to the pre-defined parameter to control an arc length between the electrode and the workpiece while the wire feed speed of the electrode, the pre-defined voltage of the welding waveform, and the pre-defined current of the welding waveform are held substantially constant. In one embodiment, the pre-defined voltage of the welding waveform is a RMS voltage and the pre-defined current of the welding waveform is a RMS current.

One embodiment includes a welding system having a waveform generator, a sensor, and a controller. The waveform generator is configured to generate a welding waveform with adjustable polarity amplitudes and an adjustable balance. In one embodiment, the welding waveform is a gas metal arc welding (GMAW) waveform. The welding waveform has a pre-defined voltage and a pre-defined current. The pre-defined voltage may be a RMS voltage and the pre-defined current may be a RMS current, in accordance with one embodiment. The sensor is configured to sense a welding parameter at a welding electrode during a welding operation. The controller is communicatively coupled to the sensor and the waveform generator and is configured to compare the welding parameter to a pre-defined parameter. The controller is also configured to adjust at least one of the polarity amplitudes and the balance of the welding waveform in response to comparing the welding parameter to the pre-defined parameter to control a stick-out distance of the electrode. A wire feed speed of the electrode may be held substantially constant. The welding parameter may correspond to an arc length between the electrode and a workpiece or a voltage between the electrode and the workpiece, for example. In one embodiment, the controller is configured to adjust at least one of the polarity amplitudes and the balance of the welding waveform in response to comparing the welding parameter to the pre-defined parameter to control an arc length between the electrode and the workpiece while the wire feed speed of the electrode, the pre-defined voltage of the welding waveform, and the pre-defined current of the welding waveform are held substantially constant. In one embodiment, the pre-defined voltage of the welding waveform is a RMS voltage and the pre-defined current of the welding waveform is a RMS current.

One embodiment includes a method of controlling a stick-out distance of an electrode during a welding operation. The method includes generating a welding waveform with adjustable polarity amplitudes and an adjustable balance. In one embodiment, the welding waveform is a gas metal arc welding (GMAW) waveform. In another embodiment, the welding waveform is a submerged-arc welding (SAW) waveform. The welding waveform has a pre-defined voltage and a pre-defined current. The pre-defined voltage may be a RMS voltage and the pre-defined current may be a RMS current, in accordance with one embodiment. The method also includes sensing a welding parameter at a welding electrode during a welding operation and comparing the welding parameter to a pre-defined parameter. In one embodiment, the welding parameter corresponds to a voltage between the electrode and a workpiece. The method further includes adjusting at least one of the polarity amplitudes and the balance of the welding waveform in response to the comparing of the welding parameter to the pre-defined parameter to control an arc length between the electrode and the workpiece while a wire feed speed of the electrode, the pre-defined voltage of the welding waveform, and the pre-defined current of the welding waveform are held substantially constant. In one embodiment, a stick-out distance of the electrode is controlled. The pre-defined voltage of the welding waveform may be a RMS voltage and the pre-defined current of the welding waveform may be a RMS current, in accordance with one embodiment.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates an embodiment of a welding system for controlling an arc length and a stick-out distance of an electrode;
FIGS. 2A-2B illustrate an example of adjusting a DC offset and a duty cycle of an AC welding waveform, in accordance with one embodiment;
FIGS. 3A-3B illustrate an example of adjusting polarity amplitudes and a balance of an AC welding waveform, in accordance with one embodiment;
FIG. 4 illustrates an embodiment of a gun tube (nozzle) showing a visible stick-out distance of an electrode, an electrical stick-out distance of the electrode, and an arc having an arc length;
FIGS. 5A-5F illustrate example embodiments of various welding waveforms as controlled by the welding system of FIG. 1; and
FIG. 6 illustrates a flow chart of a method which can be implemented in the welding system of FIG. 1 to control an arc length and a stick-out distance of an electrode.

### DETAILED DESCRIPTION

Embodiments of welding systems and methods are disclosed. In one embodiment, welding systems and methods provide control of an arc length and a stick-out distance of an electrode during a welding operation while holding a wire feed speed of the electrode and a pre-defined voltage and current of a welding waveform substantially constant.

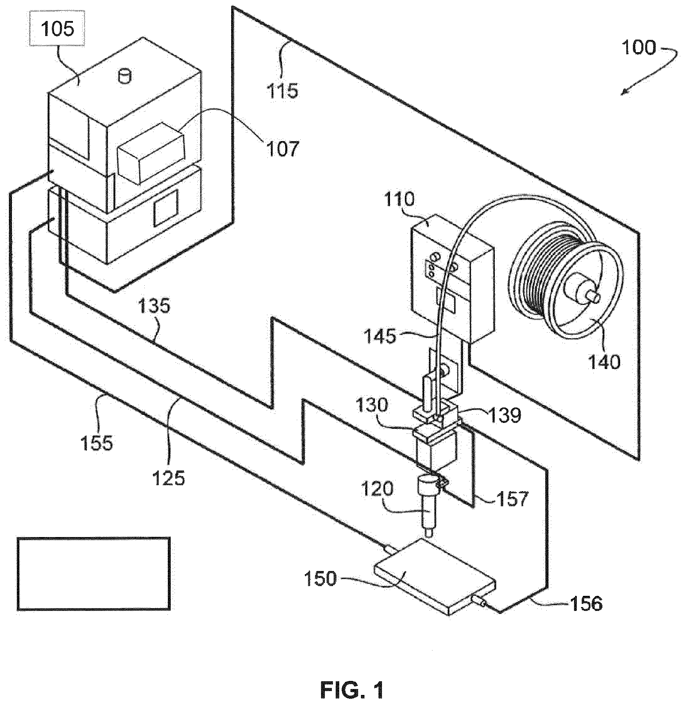

Referring now to the drawings, which are for the purpose of illustrating exemplary embodiments of the present invention only and not for the purpose of limiting same, FIG. 1 illustrates an embodiment of a welding system 100 for controlling an arc length and a stick-out distance of an electrode. The welding system 100 includes a welding power source 105 having a waveform generator 107. The welding system 100 also includes a controller 110, a welding nozzle, gun, or torch 120, a wire feeder 130, and a wire reel source 140. In FIG. 1, the welding power source 105 and the controller 110 are shown as two devices connected by a control cable 115. However, in accordance with another embodiment, the welding power source 105 and the controller 110 may be fully integrated into a single unit. An electrode wire 145 is fed from the wire reel source 140 to the wire feeder 130 and into the nozzle 120.

The welding power source 105 and the controller 110 are operationally connected to the wire feeder 130 via a wire feeder control cable 135. The welding power source 105 is operationally connected to the welding nozzle 120 via an electrode cable 125. A workpiece 150 to be welded is operationally connected to the welding power source 110 via a work cable 155. In accordance with one embodiment, the welding system 100 is a submerged arc welding (SAW) system. In accordance with another embodiment, the welding system 100 is a gas metal arc welding system (GMAW). Other types of welding systems may be possible as well in accordance with other embodiments.

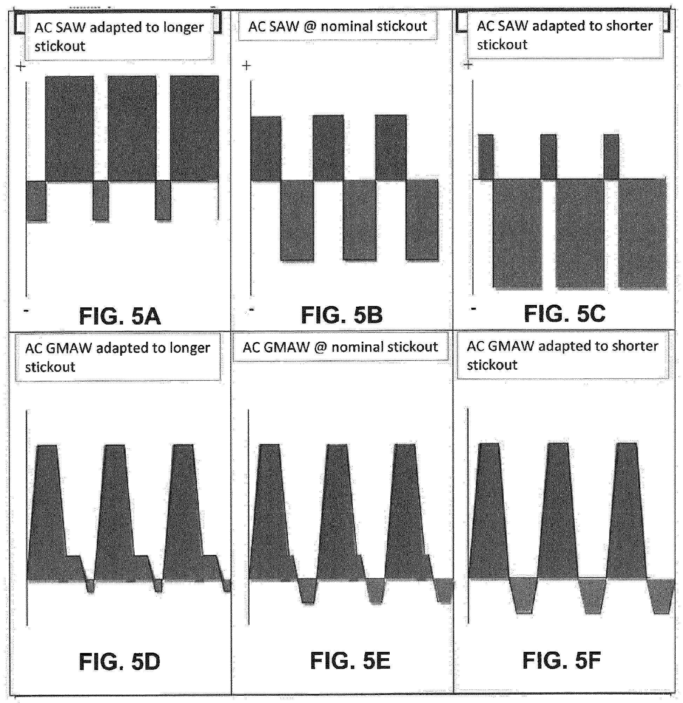

The welding power source 105 provides the welding power, in the form of AC voltage and current waveforms, via the cables 125 and 155 to form an arc between the electrode wire 145 (e.g., fed through the nozzle 120 from the wire feeder 130) and the workpiece 150. In accordance with various embodiments, AC voltage and current waveforms provide the energy to perform a welding operation (e.g., a SAW operation or a GMAW operation) to weld metal (i.e., the wire 145) onto the workpiece 150. Various characteristics of the AC waveform determine various resultant weld characteristics such as penetration and deposition. Such various AC waveform characteristics include current, voltage, balance, DC offset, polarity amplitudes, and duty cycle which are elaborated upon herein. Even though example AC waveforms are illustrated herein (e.g., see FIG. 5), other waveforms having other shapes and characteristics are possible as well, in accordance with other embodiments.

In one embodiment, the wire feeder 130 of the welding system 100 includes a sensor 139 (e.g., a voltage sensor) configured to sense a welding parameter (e.g., a voltage) at the welding electrode 145 during a welding operation. A work sense lead 156 may be operationally connected between the workpiece 150 and the wire feeder 130. Similarly, an electrode sense lead 157 may be operationally connected between the welding head and nozzle 120 and the wire feeder 130. The sense leads 156 and 157 allow the sensor 139 to sense the welding parameter. In one embodiment, the sensor 139 is operationally connected to the controller 110 to feedback the sensed welding parameter to the controller 110. The sensed welding parameter may be used by the controller 110 to control the welding waveform produced by the waveform generator 107, in accordance with one embodiment.

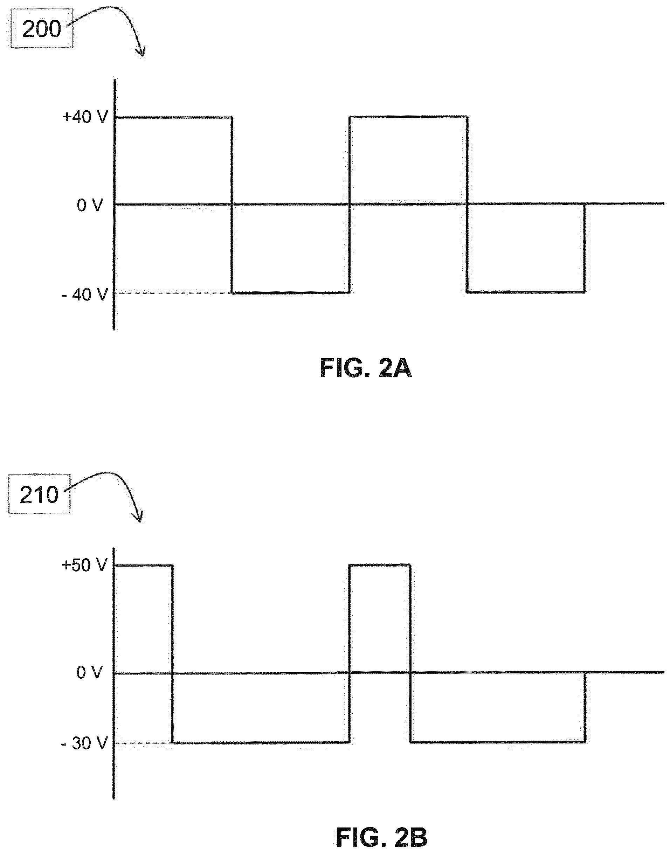

In one embodiment, the waveform generator 107 of the welding power source 105 is configured to generate a welding waveform with an adjustable DC offset and an adjustable duty cycle. The welding waveform includes a pre-defined voltage and a pre-defined current (e.g., a RMS voltage and a RMS current). The term DC offset, as used herein, refers to a displacement of the mean amplitude of an AC welding waveform from a baseline of zero (zero voltage or current). The term duty cycle, as used herein, refers to the fraction of one period of an AC welding waveform in which the waveform is positive (above zero voltage or current). As an example, a voltage welding waveform 200 (see FIG. 2A) being an 80 volt peak-to-peak symmetrical square wave centered at zero volts may be adjusted to having a 25% duty cycle and a +10 volts DC offset. The result is an adjusted waveform 210 (see FIG. 2B) being at +50 volts for 25% of each cycle and at - 30 volts for 75% of each cycle. Examples of waveforms illustrating adjustable DC offsets and duty cycles will be discussed further herein with respect to FIG. 5.

In one embodiment, the waveform generator 107 of the welding power source 105 is configured to generate a welding waveform with adjustable polarity amplitudes and an adjustable balance. The welding waveform includes a pre-defined voltage and a pre-defined current (e.g., a RMS voltage and a RMS current). The term "polarity amplitudes", as used herein, refers to the positive peak (voltage or current) of a positive portion of an AC welding waveform and the negative peak (voltage or current) of a negative portion of the AC welding waveform. Adjustments to polarity amplitudes can, but do not necessarily, correspond to applying a DC offset. When applying a DC offset, both the positive and negative peak amplitudes change by the same amount in the same direction. However, polarity amplitudes (positive and negative) may be adjusted independently of each other by different amounts.

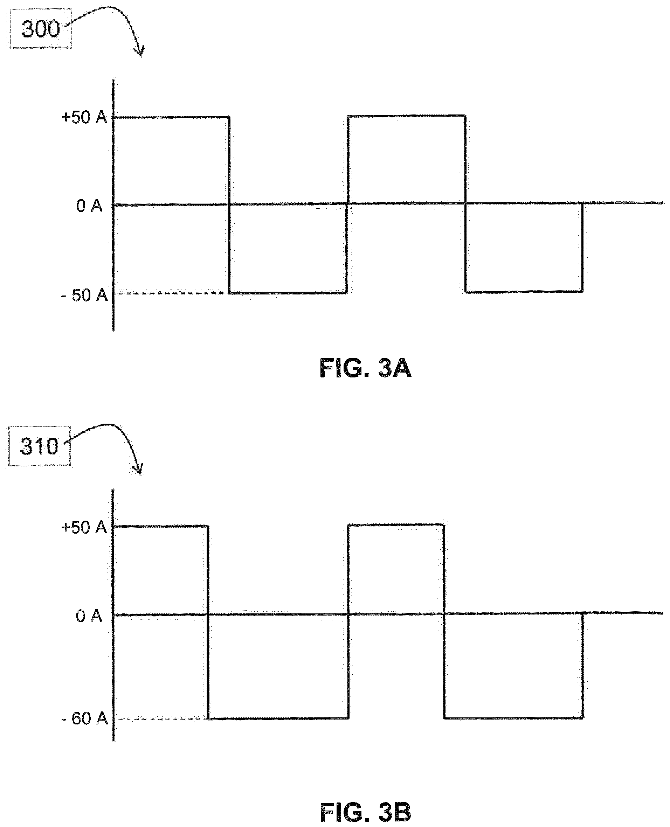

The term "balance", as used herein, refers to the amount of time a voltage or a current of an AC welding waveform is positive (above zero) versus the amount of time the current or the voltage of the AC welding waveform is negative (below zero) over one period of the AC welding waveform. Adjustments to balance can, but do not necessarily, correspond to adjustments to duty cycle (e.g., if the period of the waveform is allowed to change). As an example, a current welding waveform 300 (see FIG. 3A), being a 100 ampere peak-to-peak symmetrical square wave (1:1 balance) centered at zero amperes (+ 50 amperes positive peak and - 50 amperes negative peak), may be adjusted to a modified waveform 310 (see FIG. 3B) having 50 amperes peak positive current and - 60 amperes peak negative current with a 1:1.5 balance (positive:negative) for each cycle. Notice in FIG. 3B that the peak positive amplitude stayed at + 50 amperes, but the peak negative amplitude changed to - 60 amperes (the negative polarity amplitude changed providing 110 amperes peak-to-peak). Also, the duration of the positive portion of the waveform decreased while the duration of the negative portion of the waveform increased (the balance changed from 1:1 to 1:1.5). Examples of waveforms illustrating adjustable polarity amplitudes and balance will be discussed further herein with respect to FIG. 5.

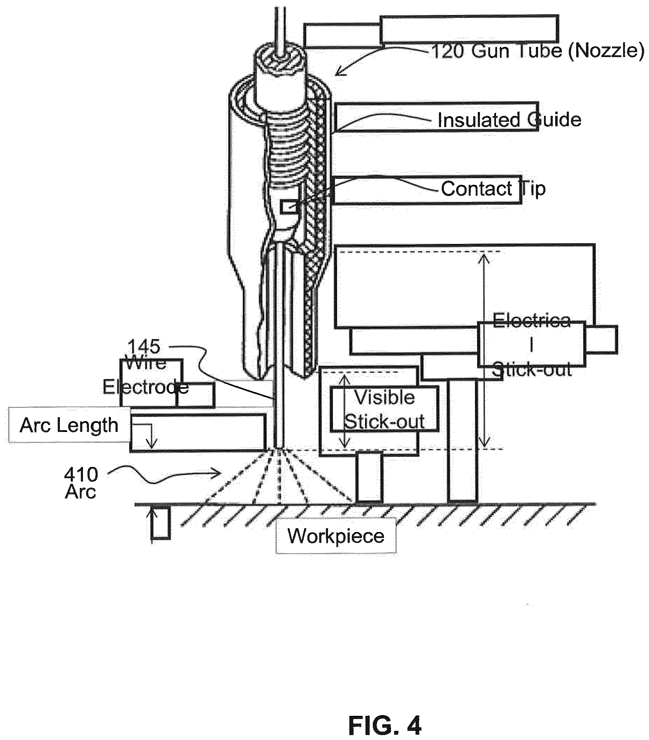

FIG. 4 illustrates an embodiment of a gun tube (nozzle) 120 showing a visible stick-out distance of an electrode 145, an electrical stick-out distance of the electrode 145, and an arc 410 having an arc length. Electrical stick-out distance may be defined from the point of electrical contact of a contact tip with the wire electrode 145 (within the gun tube (nozzle) 120) to the top of the arc 410. Visible stick-out distance may be defined from the bottom of the gun tube (nozzle) 120 to the top of the arc 410. In general, both visible stick-out distance and electrical stick-out distance increase or decrease together. However, the term "stick-out distance", as used herein, refers to electrical stick-out distance unless otherwise specified.

The stick-out distance changes when the location of the workpiece changes with respect to the welding gun tube (nozzle). This occurs often in welding operations and can be accounted for in order to maintain constant arc length and control of the welding system. As the stick-out distance increases, resistance heating of the electrode will make the electrode hotter as it approaches the arc. If nothing is adjusted (e.g., current, voltage, wire feed speed, or polarity), the arc length will tend to increase. Conversely, as stick-out distance decreases, there is less resistance heating of the electrode and the electrode will not be as hot as it approaches the arc. Again, if nothing is adjusted (e.g., current, voltage, wire feed speed, or polarity), the arc will tend to decrease. Maintaining a constant arc length during a welding process (e.g., a SAW or GMAW welding operation) is equivalent to controlling the welding process itself. While changes in stick-out distance are a result of changes in the system, something needs to compensate for changes in stick-out distance to maintain control of the system.

In the past, to control the arc length or stick-out distance in CV GMAW or SAW systems, current was varied while holding voltage and wire feed speed relatively steady (constant deposit rate systems). To control the arc length or stick-out distance in CC GMAW or SAW systems, wire feed speed was varied while holding current and voltage relatively steady (constant heat systems). In accordance with certain embodiments of the present invention, current, voltage, and wire feed speed are held substantially constant during a welding operation and, instead, one or more of a DC offset (or polarity amplitudes) and a duty cycle (or a balance) of a welding waveform are adjusted to control the arc length or stick-out distance.

FIGS. 5A-5F illustrate example embodiments of various welding waveforms as controlled by the welding system 100 of FIG. 1. While trying to maintain a desired arc length during a welding operation, if the arc length becomes too short or too long, the stick-out distance may be adjusted. FIGS. 5A-5C correspond to a SAW welding operation. FIG. 5B shows one embodiment of an AC welding waveform (e.g., voltage or current) used in a SAW welding operation providing a nominal or desired stick-out distance and arc length. Should the arc length begin to deviate from the desired arc length by lengthening or shortening, then the AC waveform of FIG. 5B is adjusted to form the AC waveform of FIG. 5A or FIG. 5C which results in adjusting the stick-out distance.

When the arc length becomes too long, the arc voltage is too high and a lower "heat" or less "burn off rate" is needed. Decreased burn off rate corresponds to more positive amplitude and more time spent in the positive portion of the waveform. Therefore, to achieve the AC welding waveform of FIG. 5A, a positive DC offset is applied to the AC welding waveform of FIG. 5B and the duty cycle is adjusted such that more time is spent in the positive portion of the waveform and less time is spent in the negative portion of the waveform, as shown in FIG. 5A. In accordance with one embodiment, the adjustments of DC offset and duty cycle are made such that the RMS currents of the welding waveforms of FIG. 5A and FIG. 5B are substantially the same, the RMS voltages of the welding waveforms of FIG. 5A and FIG. 5B are substantially the same, and the wire feed speed of the welding wire electrode remains substantially unchanged (i.e., the RMS current, the RMS voltage, and the wire feed speed are held substantially constant). Some relatively minor variations in the RMS current, the RMS voltage, and the wire feed speed may occur, however.

When the arc length becomes too short, the arc voltage is too low and a higher "heat" or more "burn off rate" is needed. Increased burn off rate corresponds to more negative amplitude and more time spent in the negative portion of the welding waveform. Therefore, to achieve the AC welding waveform of FIG. 5C, a negative DC offset is applied to the AC welding waveform of FIG. 5B and the duty cycle is adjusted such that more time is spent in the negative portion of the waveform and less time is spent in the positive portion of the waveform, as shown in FIG. 5C. In accordance with one embodiment, the adjustments of DC offset and duty cycle are made such that the RMS currents of the welding waveforms of FIG. 5B and FIG. 5C are substantially the same, the RMS voltages of the welding waveforms of FIG. 5B and FIG. 5C are substantially the same, and the wire feed speed of the welding wire electrode remains substantially unchanged (i.e., the RMS current, the RMS voltage, and the wire feed speed are held substantially constant). Some relatively minor variations in the RMS current, the RMS voltage, and the wire feed speed may occur, however.

In this manner, arc length and stick-out distance can be controlled by adjusting a DC offset and/or a duty cycle of an AC welding waveform while holding pre-defined (e.g., user set) current, voltage, and wire feed speed substantially constant. Such control is particularly effective in SAW applications.

FIGS. 5D-5F correspond to a GMAW welding operation. FIG. 5E shows one embodiment of an AC welding waveform (e.g., voltage or current) used in a GMAW welding operation providing a nominal or desired stick-out distance and arc length. Should the arc length begin to deviate from the desired arc length by lengthening or shortening, then the AC waveform of FIG. 5E is adjusted to form the AC waveform of FIG. 5D or FIG. 5F which results in adjusting the stick-out distance.

When the arc length becomes too long, the arc voltage is too high and a lower "heat" or less "burn off rate" is needed. Decreased burn off rate corresponds to more positive amplitude and more time spent in the positive portion of the waveform. Therefore, to achieve the AC welding waveform of FIG. 5D, the negative polarity amplitude of the AC welding waveform of FIG. 5E is reduced (the positive polarity amplitude is kept the same in this example) and the balance is adjusted such that more time is spent in the positive portion of the waveform and less time is spent in the negative portion of the waveform, as shown in FIG. 5D. In accordance with one embodiment, the adjustments of negative polarity amplitude and balance are made such that the RMS currents of the welding waveforms of FIG. 5D and FIG. 5E are substantially the same, the RMS voltages of the welding waveforms of FIG. 5D and FIG. 5E are substantially the same, and the wire feed speed of the welding wire electrode remains substantially unchanged (i.e., the RMS current, the RMS voltage, and the wire feed speed are held substantially constant). Some relatively minor variations in the RMS current, the RMS voltage, and the wire feed speed may occur, however. In other embodiments, the positive polarity amplitude may be adjusted and the negative polarity amplitude may be kept the same, or both the positive and negative polarity amplitudes may be adjusted. Adjustable polarity amplitudes provide such flexibility over that of a simple DC offset.

When the arc length becomes too short, the arc voltage is too low and a higher "heat" or more "burn off rate" is needed. Increased burn off rate corresponds to more negative amplitude and more time spent in the negative portion of the welding waveform. Therefore, to achieve the AC welding waveform of FIG. 5F, the negative polarity amplitude of the AC welding waveform of FIG. 5E is increased (the positive polarity amplitude is kept the same in this example) and the balance is adjusted such that less time is spent in the positive portion of the waveform and more time is spent in the negative portion of the waveform, as shown in FIG. 5F. In accordance with one embodiment, the adjustments of negative polarity amplitude and balance are made such that the RMS currents of the welding waveforms of FIG. 5E and FIG. 5F are substantially the same, the RMS voltages of the welding waveforms of FIG. 5E and FIG. 5F are substantially the same, and the wire feed speed of the welding wire electrode remains substantially unchanged (i.e., the RMS current, the RMS voltage, and the wire feed speed are held substantially constant). Some relatively minor variations in the RMS current, the RMS voltage, and the wire feed speed may occur, however. In other embodiments, the positive polarity amplitude may be adjusted and the negative polarity amplitude may be kept the same, or both the positive and negative polarity amplitudes may be adjusted. Again, adjustable polarity amplitudes provide such flexibility over that of a simple DC offset.

In this manner, arc length and stick-out distance can be controlled by adjusting polarity amplitudes and/or a balance of an AC welding waveform while holding pre-defined (e.g., user set) current, voltage, and wire feed speed substantially constant. Such control is particularly effective in GMAW applications.

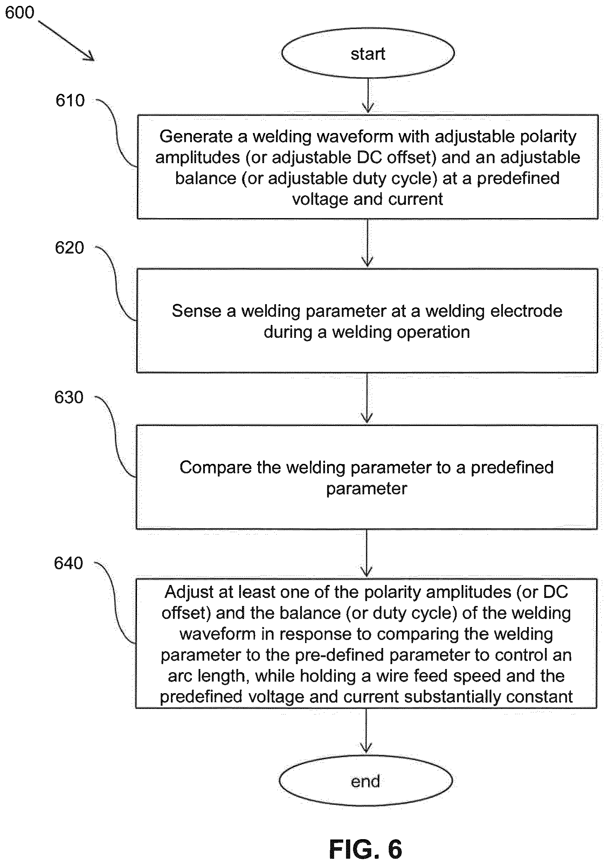

FIG. 6 illustrates a flow chart of a method 600 which can be implemented in the welding system 100 of FIG. 1 to control an arc length and a stick-out distance of an electrode during a welding operation. At 610 of the method 600, a welding waveform with adjustable polarity amplitudes (or an adjustable DC offset) and an adjustable balance (or an adjustable duty cycle) is generated. The welding waveform includes a pre-defined voltage and a pre-defined current (e.g., the RMS voltage and current may have been set by a user). In one embodiment, the welding waveform is an AC waveform generated by the waveform generator 107 of FIG. 1. The welding waveform may be, for example, a GMAW waveform or a SAW waveform.

At 620, a welding parameter is sensed at a welding electrode during the welding operation. For example, the welding parameter may be a voltage that is sensed between the electrode and a workpiece. In one embodiment, such a voltage is sensed by the sensor 139 of FIG. 1 (e.g., a resistive or capacitive voltage divider sensor) via sense leads 156 and 157. Other types of welding parameters may be sensed, in accordance with other embodiments, using other types of sensors (e.g., sensing a flowing current at the electrode using a shunt or a coil, or directly sensing arc length using an imaging device).

At 630, the sensed welding parameter is compared to a pre-defined parameter. For example, a sensed voltage may be compared to a pre-defined voltage level stored in the controller 110, or a sensed current may be compared to a pre-defined current level stored in the controller 110. In one embodiment, the comparison is performed by the controller 110 which generates a comparison value. The comparison value may be the difference between the sensed weld parameter and the pre-defined parameter, for example. Other types of comparison values are possible as well, in accordance with other embodiments.

At 640, at least one of the polarity amplitudes (or the DC offset) and the balance (or the duty cycle) of the welding waveform is adjusted in response to the comparison of the welding parameter to the pre-defined parameter. Adjusting the welding waveform controls the arc length (and a stick-out distance) between the electrode and the workpiece while the pre-defined voltage of the welding waveform and the pre-defined current of the welding waveform are held substantially constant. In one embodiment, a pre-defined wire feed speed of the electrode may also be held substantially constant. In accordance with one embodiment, the pre-defined voltage of the welding waveform is a root-mean-square (RMS) voltage and the pre-defined current of the welding waveform is a root-mean-square (RMS) current. The method 600 of FIG. 6 is performed continuously in real time, in accordance with one embodiment, such that the desired arc length is maintained during a welding operation.

In summary, embodiments of welding systems and methods have been disclosed. In one embodiment, a welding system includes a waveform generator to generate an AC welding waveform with an adjustable DC offset (and/or adjustable polarity amplitudes) and an adjustable duty cycle (and/or an adjustable balance). A sensor of the welding system senses a welding parameter at a welding electrode during a welding operation. A controller of the welding system is coupled to the sensor and the waveform generator and compares the welding parameter to a pre-defined parameter. The controller adjusts at least one of the DC offset (or polarity amplitudes) and the duty cycle (or balance) of the welding waveform in response to comparing the welding parameter to the pre-defined parameter to control an arc length and a stick-out distance of the electrode.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

**REFERENCE NUMBERS**

| | | | |
|---|---|---|---|
| 100 | system | 150 | workpiece |
| 105 | power source | 155 | work cable |
| 107 | generator | 156 | work sense lead |
| 110 | controller | 157 | electrode sense lead |
| 115 | control cable | 200 | waveform |
| 120 | nozzle | 210 | waveform |
| 125 | electrode cable | 300 | waveform |
| 130 | wire feeder | 310 | waveform |
| 135 | control cable | 410 | arc |
| 139 | sensor | 600 | method |
| 140 | wire reel source | | |
| 145 | electrode wire | | |

## Claims

1. A welding system (100), comprising:
a waveform generator (107) configured to generate a welding waveform with an adjustable DC offset and an adjustable duty cycle, wherein the welding waveform includes a pre-defined voltage and a pre-defined current;
a sensor (139) configured to sense a welding parameter at a welding electrode during a welding operation; and
a controller (110) communicatively coupled to the sensor (139) and the waveform generator (107), wherein the controller (110) is configured to:
compare the welding parameter to a pre-defined parameter, and
adjust at least one of the DC offset and the duty cycle of the welding waveform in response to comparing the welding parameter to the pre-defined parameter to control a stick-out distance of the electrode.

2. The welding system (100) of claim 1, wherein the welding waveform is a submerged-arc welding (SAW) waveform.

3. The welding system (100) of claim 1 or 2, wherein the controller (100) is configured to adjust at least one of the DC offset and the duty cycle of the welding waveform in response to comparing the welding parameter to the pre-defined parameter to control an arc length between the electrode and a workpiece (150) while a wire feed speed of the electrode, the pre-defined voltage of the welding waveform, and the pre-defined current of the welding waveform are held substantially constant.

4. A welding system (100), comprising:
a waveform generator (107) configured to generate a welding waveform with adjustable polarity amplitudes and an adjustable balance, wherein the welding waveform includes a pre-defined voltage and a pre-defined current;
a sensor (139) configured to sense a welding parameter at a welding electrode during a welding operation; and
a controller (110) communicatively coupled to the sensor (139) and the waveform generator (107), wherein the controller (110) is configured to:
compare the welding parameter to a pre-defined parameter, and
adjust at least one of the polarity amplitudes and the balance of the welding waveform in response to comparing the welding parameter to the pre-defined parameter to control a stick-out distance of the electrode.

5. The welding system (100) of claim 4, wherein the welding waveform is a gas metal arc welding (GMAW) waveform.

6. The welding system (100) of any of the claims 1 to 5, wherein the welding parameter corresponds to an arc length between the electrode and a workpiece (150), and/or wherein the welding parameter corresponds to a voltage between the electrode and a workpiece (150).

7. The welding system (100) of any of the claims 1 to 6, wherein a wire feed speed of the electrode is held substantially constant.

8. The welding system (100) of any of the claims 4 to 7, wherein the controller (110) is configured to adjust at least one of the polarity amplitudes and the balance of the welding waveform in response to comparing the welding parameter to the pre-defined parameter to control an arc length between the electrode and a workpiece (150) while a wire feed speed of the electrode, the pre-defined voltage of the welding waveform, and the pre-defined current of the welding waveform are held substantially constant.

9. The welding system (100) of any of the claims 1 to 8, wherein the pre-defined voltage of the welding waveform is a root-mean-square (RMS) voltage and the pre-defined current of the welding waveform is a root-mean-square (RMS) current.

10. A method of controlling a stick-out distance of an electrode during a welding operation, the method comprising:
generating a welding waveform with adjustable polarity amplitudes and an adjustable balance, wherein the welding waveform includes a pre-defined voltage and a pre-defined current;
sensing a welding parameter at a welding electrode during a welding operation;
comparing the welding parameter to a pre-defined parameter; and
adjusting at least one of the polarity amplitudes and the balance of the welding waveform in response to the comparing of the welding parameter to the pre-defined parameter to control an arc length between the electrode and a workpiece while a wire feed speed of the electrode, the pre-defined voltage of the welding waveform, and the pre-defined current of the welding waveform are held substantially constant.

11. The method of claim 10 wherein the welding waveform is a gas metal arc welding (GMAW) waveform, and/or wherein the welding waveform is a submerged-arc welding (SAW) waveform.

12. The method of claim 10 or 11, wherein the welding parameter corresponds to one of a voltage between the electrode and the workpiece or a current flowing at the electrode.

13. The method of any of the claims 10 to 12, wherein the pre-defined voltage of the welding waveform is a root-mean-square (RMS) voltage and the pre-defined current of the welding waveform is a root-mean-square (RMS) current.

14. The method of any of the claims 10 to 13, wherein a stick-out distance of the electrode is controlled by the adjusting of at least one of the polarity amplitudes and the balance of the welding waveform in response to the comparing of the welding parameter to the pre-defined parameter.
